# EUROPEAN PATENT SPECIFICATION

(11) **EP 0 694 597 B1**
(45) Date of publication and mention of the grant of the patent: **03.09.1997**
(21) Application number: 94305235.7
(22) Date of filing: 18.07.1994
(51) Int. Cl.: C09D 201/00, C08F 2/44, C08F 289/00, D21H 19/58, D21J 1/08

(54) **Polymer containing hydrocarbon wax and its use**
Polymerisat mit Kohlenwasserstoffwachs und deren Verwendung
Polymère contenant de la cire hydrocarbonée et son utilisation

(43) Date of publication of application: 31.01.1996
(73) Proprietor: Dussek Campbell Limited, Crayford, Kent DA1 4OJ (GB); VINAMUL LTD., Carshalton, Surrey SM5 2JU (GB)
(72) Inventor: McLennan, Alistair John,, Hackbridge, Surrey SM6 7HL (GB); Neill, William Frederick Patrick,, West Wickham, Kent BR4 9DF (GB)
(74) Representative: Wiesenhaan, Herman, Drs.

(56) References cited:
- US-A- 3 696 067
- US-A- 5 034 454
- DATABASE WPI Section Ch, Week 8232, Derwent Publications Ltd., London, GB; Class A87, AN 82-67167E & JP-A-57 108 114 (DAINIPPON) 6 July 1982

## Description

The invention relates to the use of certain polymeric materials containing an amount of hydrocarbon wax in the treatment of certain substrates to improve the properties of the latter. Also the invention relates to certain improved substrates and certain polymeric materials containing a percentage of hydrocarbon wax.

German specification (DE-A-) 30 48 818 (BASF, Germany) discloses emulsions of polymers containing a conjugated diolefin, which emulsions are useful as an additive for concrete and mortar compositions, bridge and parking pavement compositions etc. More in particular the citation discloses a polymer in the form of a latex which polymer comprises a conjugated C4-C6 diolefin monomer, preferably a polymer comprising a C4-C6 diolefin and a vinylaromatic compound and especially a polymer of a C4-C6 conjugated diolefin and a vinylaromatic monomer and one or more ethylenically unsaturated carboxylic acids or derivatives thereof. These known emulsions consequently always contain a substantial amount of conjugated diene such as butadiene or isoprene and at most small quantities of acrylics. Polymerising mixtures of monomers comprising substantial amounts of lower diolefins has the drawback that pressure vessels (autoclaves) are required. Moreover polymeric materials containing substantial amounts of diolefin do not always have favourable properties.

JP-A-57/108 114 (Dainippon) and the WPI abstract thereof disclose the preparation and use of a wide range of polymers of the aqueous dispersion type based on a combination of numerous possible unsaturated monomers. These polymer dispersions are useful in the waterproofing of e.g. umbrella cloth, rain coat, covering sheet for cars and waterproof sheet. The aqueous polymer is applied to such a substrate together with a crosslinking agent like e.g. aminoplast and then caused to react by a heating/curing treatment. For good results there often is a pre-treatment of the substrate with an water-repellant. Most of the mixtures of monomers polymerised in dispersion according to the citation do not comprise a vinylaromatic monomer, furthermore a conjugated diolefin (butadiene) is sometimes present. There is no disclosure or suggestion of polymerising and using a mixture of monomers comprising a vinylaromatic monomer in the absence of a conjugated diolefin. Ipso facto there is no disclosure or suggestion of applying a coating of such a polymer dispersion to a substrate that can be repulped and recycled.

US-A-5 034 454 (Maska et al) discloses Waterdispersible acrylic copolymers obtained by polymerisation in a solution of the monomer in Cellosolve, especially butylcellosolve. The polymer solution is subsequently used as dip coatings for which purpose good flow properties are a requirement. To obtain these good flow properties a mixture of unsaturated polymers containing sulfonic acid/salt/ester and optionally a wax is used. The acrylic resin is subsequently crosslinked with an aminoplast curing agent.

JP-A-55/071 747 (Dainippon) discloses the preparation and use of a wide range of polymers of the aqueous dispersion type based on a combination of numerous possible monounsaturated monomers. The dispersions are obtained by polymerising a mixture of unsaturated compounds by emulsion polymerization and the emulsions also contain a wax (paraffin wax, microcrystalline wax or intermediate wax) in order to improve water repellency, water resistance, weather resistance and staining resistance. According to the claim 2-40% (w.w.) of wax is mixed in the dispersions based on the amount of solid (polymer) in the dispersion. All of the Examples contain, however 20% or more of wax.

Optionally a functional monomer and/or an organic cross-linking agent is included whereby thermosetting ability can be obtained and whereby "it is possible to give a baked film exhibiting far better water repellency, water resistance, durability of the water resistance and weather resistance". These polymer dispersions are useful in the preparation of paints, especially outdoor paints.

An outdoor paint for masonry or wood would have to breath, (to avoid condensation), but would have to repel liquid water, and therefore could not have a low MVTR (Moisture Vapour Transmission Rate).

Durable paints having a good resistance against water, sun and rain are not the kind of materials which are expected to be repulpable, moreover a coating having a good staining resistance would not be expected to be printable. Clearly outdoor paints (e.g. for masonry) and sizings/coatings for repulpable and recyclable paper and other substrates have to satisfy different requirements. Also it is clear that the former are preferably crosslinked whereas the latter need to be non-crosslinked and thermoplastic. Finally high percentages of wax as a rule cause difficulties in repulping and recycling operations.

JP-A-59/142 262 (Dainippon) discloses the preparation and use of a wide range of polymers of the aqueous dispersion type based on a combination of numerous possible monounsaturated monomers which dispersions always contain an amount of colloidal silica which further improves the properties by virtue of it being a reactive inorganic polymer. "In addition, the colloidal silica (C) reacts with hydroxyl groups existing on the surface of the inorganic base material to form a cross-linking bond whereby a strong coat comprising both organic and inorganic substances is formed on the surface of the base material and, as a result, a high weather resistance which has not been available in the past can be achieved." (Cf p. 11 of the translation, first paragraph.) Such cross-linked polymers evidently miss thermoplasticity.

EP-A-0 688 793 (Air Products), first filed 14.06.94 US, published 27.12.95 and designating only DE DK and FR is a publication under EPC Art. 54 (3) (4). It discloses that it was known to use polymeric emulsions containing a wax in inks and coatings so as to improve coatings as to Moisture Vapour Transmission Rate (MVTR), for barrier coatings and non-skid top coatings but there were problems like a reduction in gloss, wax separation from the system or coagulation of latex particles. These disadvantages are said to be alleviated by a special way of preparing the polymeric emulsion in which an emulsion medium is formed, comprising water, stabilizing surfactant system, hydrophobic wax and at least one ethylenically unsaturated monomer and effecting emulsion polymerization of the monomer in the presence of said wax. Many types of waxes can be used viz. natural waxes from vegetables or animals, mineral waxes, petroleum waxes, and synthetic waxes: the wax is present in amounts from 0.05 - 10%.
The Examples disclose many types of waxes but no waxes obtained by petroleum refining or by Fischer-Tropsch synthesis; moreover all compositions contain another filmforming resin viz. Vancryl^{R} 65 which is known to improve gloss, scuff resistance, hardness etc in acrylic resins according to a company pamphlet. It is noted that the coating compositions were only applied to SUS (Solid Unbleached Sulphate) paper board and subjected to heating to 80°C, i.e. above the melting point of the wax and the T_{g} of the polymer as to obtain the desired coating which was then evaluated. There is neither a mention or suggestion of repulping and recycling of coated substrates, ipso facto not of coated SUS paper board.

For environmental reasons it is desirable to reduce the amount of plastic material used e.g. in packaging and to increase the use of recyclable materials. It has been proposed to use hydrocarbon waxes to upgrade e.g. materials comprising fibres, in particular paper, wood, board and textiles usually by treatment with a molten hydrocarbon wax which has a low surface tension and penetrates easily, but this process is difficult to control. Moreover for recyclability and repulpability the large amount of wax often employed generally makes the fibres slip.

Consequently there has been a need for materials, especially materials comprising fibrous constituents such as paper, carton, board, organic fibres, wood, wood composites and non-woven textiles which can be recycled and repulped without difficulties which materials possess improved properties such as hydrophobicity and/or moisture vapour resistance.

In a first embodiment the present invention provides the use of a polymer obtainable by emulsion or suspension polymerisation of a mixture of ethylenically unsaturated monomers comprising:
(1) 35-98 parts by weight (calculated on the total amount of monomers in the mixture) of C1-C18 alkyl(meth)acrylate;
(2) 0.05-5 parts of C3 - C8 unsaturated carboxylic acid;
(3) 1-60 parts by weight of a vinyl aromatic monomer and which mixture is substantially free from C3-C8 conjugated diolefins,
in the presence of 0.01 to 5 wt% calculated on the monomers of a hydrocarbon wax obtainable by petroleum refining or by Fischer-Tropsch synthesis having a melting point of 25 to 125°C which wax is incorporated in the polymer during polymerization for coating a substrate comprising paper, carton, board, organic fibres, wood, wood composites and non-woven textiles with said polymer in order to impart or improve hydrophobicity and/or moisture vapour resistance and as to obtain a coated, recyclable and repulpable substrate.

The mixture of ethylenically unsaturated monomers comprises a vinylaromatic compound, such as styrene and α-methylstyrene, an unsaturated carboxylic acid such as acrylic acid, methacrylic acid, crotonic acid, itaconic acid, maleic acid and fumaric acid as well as a C1-C18 alkyl(meth)acrylate such as butylacrylate and 2-ethykhexylacrylate. Moreover the mixture of monomers is substantially free from C3-C8 conjugated diolefins.

Emulsion and suspension polymerisation techniques are well-known in the art and are e.g. disclosed in "Emulsion Polymerisation", D.C. Blackley, Applied Science Publishers, 1974; in "Emulsion Polymerization and its Applications in Industry", Eliseeva, Ivanchev, Kuchanow and Lebedev, Khimia 1976 and in "Textbook of Polymer Science", F. W. Billmeyer, Wiley, 1975, Chapter 12, p 341-342 and p 343-347 which are incorporated herein by reference. In these polymerisations preferably a suitable free radical initiator can be used, for example ammonium and alkali persulphate, hydrogen peroxide or an organic peroxide, either alone or in conjunction with a reducing agent such as sodium metabisulphate, sodium formaldehyde sulphoxylate or ascorbic acid. To stabilise the latex, one or more surfactants of the nonionic or anionic type may be employed. Such surfactants are well-known in the art. For obtaining special effects minor amounts of other monomers not being diolefins, for example acrylamide, can also be incorporated.
In a preferred embodiment of the invention the substrates are paper, carton, board, wood or composite wood.

In another embodiment the invention provides a process for imparting or improving hydrophobicity and/or moisture vapour resistance whilst retaining recyclability and repulpability of a substrate comprising paper, carton, board, organic fibres, wood, wood composites and non-woven textiles which comprises coating the substrate with a polymer obtainable by emulsion or suspension polymerisation of a mixture of ethylenically unsaturated monomers comprising:
(1) 35-98 parts by weight (calculated on the total amount of monomer in the mixture) of C1-C18 alkyl(meth)acrylate;
(2) 0.05-5 parts of C3 - C8 unsaturated carboxylic acid;
(3) 1-60 parts by weight of a vinyl aromatic monomer and which mixture is substantially free from C3-C8 conjugated diolefins,
in the presence of 0.01 to 5 wt% calculated on the monomers of a hydrocarbon wax obtainable by petroleum refining or by Fischer-Tropsch synthesis having a melting point of 25 to 125°C incorporated in the polymer during polymerization.

Within the term coating or "applying on" is to be understood any method of applying a polymer film i.e. coating with a brush or applicator, spraying, impregnating etc. The degree of hydrophobicity and/or moisture vapour resistance is determined by the amount of polymer with incorporated hydrocarbon wax applied on the substrate. Dependent on the nature of the substrate and the degree of hydrophobicity and moisture vapour resistance desired the amount of polymer by weight applied on the substrate usually varies between 0.5 and 25%, preferably from 3 to 15% w/w.

Without wishing to be bound by theory the applicants have assumed on the basis of certain determined parameters that the hydrocarbon wax appears to have been grafted on the (co)polymer or encapsulated by the (co)polymer as a result of polymerizing the monomeric mixture by emulsion or suspension technique in the presence of a dissolved, emulsified or suspended hydrocarbon wax. The hydrocarbon waxes which are useful in the context of the present invention are waxes obtainable by petroleum refining and Fischer-Tropsch synthesis. Preferred are hydrocarbon waxes from petroleum refining.
In another embodiment of the invention there is provided a repulpable and recyclable substrate comprising paper, carton, board, organic fibres, wood, wood composites and non-woven textiles with improved hydrophobicity and/or moisture vapour resistance which is coated with a polymer obtainable by emulsion or suspension polymerisation of a mixture of ethylenically unsaturated monomers comprising:
(1) 35-98 parts by weight (calculated on the total amount of monomer in the mixture) of C1-C18 alkyl(meth)acrylate;
(2) 0.05-5 parts of C3 - C8 unsaturated carboxylic acid;
(3) 1-60 parts by weight of a vinyl aromatic monomer and which mixture is substantially free from C3-C8 conjugated diolefins,
in the presence of 0.01 to 5 wt% calculated on the monomers of a hydrocarbon wax obtainable by petroleum refining or by Fischer-Tropsch synthesis having a melting point of 25 to 125°C incorporated in the polymer during polymerization.

In a preferred embodiment the present invention provides the the use, the process and/or the repulpable and recyclable substrate described above in which the amount of hydrocarbon wax employed is at least 0.05 wt% calculated on monomer, more in particular from 0.25 to 2 wt% calculated on monomer.

In preferred embodiments the present invention provides the use, the process and/or the repulpable and recyclable substrate described above in which the hydrocarbon wax has a melting point between 40 and 80°C.

In another preferred embodiment the invention provides the use, the process and/or the repulpable and recyclable substrate, described above in which the hydrocarbon wax is substantially a saturated, aliphatic hydrocarbon wax.

In another embodiment the invention provides a polymer obtainable by emulsion or suspension technique comprising polymerising a mixture of monomers comprising:
(1) 46-65.5 parts by weight (calculated on the total amount of monomer in the mixture) of C1-C18 alkyl(meth)acrylate;
(2) 0.05-5 parts of C3 - C8 unsaturated carboxylic acid;
(3) 30.5-50 parts by weight of a vinyl aromatic monomer and which mixture is substantially free from C3-C8 conjugated diolefins,
in the presence of 0.01 to 5 wt% calculated on the monomers of a hydrocarbon wax obtainable by petroleum refining or by Fischer-Tropsch synthesis having a melting point of 25 to 125°C.

In another embodiment the invention provides the use, the process and/or the repulpable and recyclable substrate, described above in which the ethylenically unsaturated monomers comprise:
(1) 46-65.5 parts by weight (calculated on the total amount of monomer in the mixture) of C1-C18 alkyl(meth)acrylate;
(2) 0.05-5 parts of C3 - C8 unsaturated carboxylic acid; and
(3) 30.5-50 parts by weight of a vinyl aromatic monomer and which mixture is substantially free from C3-C8 conjugated diolefins.

A hydrocarbon wax incorporated in a styrene-acrylic latex according to the present invention was found very useful for the paper, wood and board industry and produced an excellent moisture vapour barrier coating on these substrates which was extremely hydrophobic.

In a preferred embodiment the invention provides a polymer obtainable by introducing the hydrocarbon wax in the polymerization mixture in the form of a solid wax dissolved in monomer or in the form of a wax emulsion / dispersion either in monomer or another extender. The extender can be e.g. water or another suitable polar or non-polar liquid.

In a preferred embodiment the invention provides a polymers as set out above in which the mixture of monomers comprises styrene and/or α-methylstyrene; (meth)acrylic acid and a C1 to C18 alkylester of (meth)acrylic acid.

In another preferred embodiment the invention provides a polymer as set out above in which the mixture of monomers comprises styrene, acrylic acid and methylmethacrylate, butylacrylate and/or 2-ethylhexyl acrylate.

In another embodiment the invention provides a polymer obtained by polymerising by an emulsion or suspension technique - preferably by emulsion polymerisation a mixture of monomers in the presence of a wax in which the mixture of monomers is substantially free from (lower) conjugated diolefin and contains an unsaturated carboxylic acid.

Preferably the polymer provided is obtained by polymerising a composition of styrene, C1-C18 alkyl(meth)acrylate and C3-C8 unsaturated carboxylic acid

In another embodiment the invention provides a polymeric composition with incorporated hydrocarbon wax as set out above in the form of a latex or dispersion.

In another embodiment of the present invention there is provided the use of coated substrate as defined above in the recycling and repulping of materials.

One very useful method of investigating polymers with incorporated hydrocarbon wax is by Differential Scanning Calorimetry (DSC).
The DSC temperature peaks of wax or wax containing composition can be determined in the conventional way using a differential scanning calorimeter. A short survey of this method with some literature references is given in Ullmanns Encyklopädie der technischen Chemie, 4.Auflage, Band 5, pages 793-795.
The amount of solids in a wax or wax-containing composition at any given temperature as well as the melting point range may be determined by measuring the latent heat of fusion of each wax by using Differential Scanning Calorimetry (DSC) by a process described in Miller, W.J. et al Journal of American Oil Chemists' Society, July, 1969, V. 46, No 7, page 341-343, incorporated by reference. This procedure was modified as discussed below. DSC equipment used in the procedure is preferably the Perkin Elmer DSC-4.
Specifically the DSC is utilized to measure the total latent heat of fusion of multi-component systems which do not have a distinct melting point, but rather, melt over a temperature range. At an intermediate temperature within this range one is capable of determining the fraction of the latent heat required to reach that temperature. When acquired for a multi-component mixture of similar components such as commercial waxes, this fraction correlates directly to the liquid fraction of the mixture at that temperature. The solids fraction for the waxes of interest are e.g. measured at 50°C and 60°C by running a DSC trace from 0°C. to 80°C. and measuring the fraction of the total latent heat of fusion required to reach these temperatures.

The invention is illustrated by the following non-limiting example. All parts and percentages were taken by weight unless otherwise indicated.

### Example 1

A solution of 0.30 parts of an anionic surfactant, (the sodium salt of sulphated lauryl alcohol), in 37.17 parts of deionised water was placed in a five-necked reaction flask equipped with a thermometer, agitator, condenser, nitrogen purge and suitable addition funnels. The flask was heated to 25°C and purged for 30 minutes with nitrogen.

A pre-emulsion was prepared by mixing a monomer phase "A" with a water phase "B". Monomer phase "A" was made as follows: 1.00 part of a paraffin wax having a melting point of 57-60°C, was dissolved in 40.50 parts of styrene, after which 54.50 parts of butyl acrylate, 4.00 parts of acrylic acid and 4.00 parts of a nonionic surfactant, (a nonylphenol ethoxylate containing 9 moles of ethylene oxide), were added. The water phase "B" was made as follows: 5.71 parts of a 70% solution of a nonionic surfactant, (a nonylphenol ethoxylate containing 30 moles of ethylene oxide), was dissolved in 40.70 parts of deionised water. Monomer phase "A" and water phase "B" were mixed together using a high speed mixer to make a pre-emulsion.

10% of the pre-emulsion was added to the reactor and stirred for 5 minutes. A solution of 0.25 parts ammonium persulphate in 0.88 parts of deionised water was added and stirred for 5 minutes, then a solution of 0.25 parts of sodium metabisulphite in 0.88 parts of deionised water and 0.18 parts of a 0.1% ferric ion solution was added. After 10 minutes, the continuous additions of the remainder of the pre-emulsion, a solution of 0.25 parts of ammonium persulphate in 7.96 parts of deionised water, and a solution of 0.25 parts of sodium metabisulphite in 7.96 parts of deionised water were commenced to last 3 hours. The temperature was increased over 20 minutes to 50°C, and maintained there for the duration of the slow additions.

At the end of the slow additions, the temperature was maintained at 50°C for 15 minutes, then 1.00 part of methyl methacrylate was added, followed by a solution of 1.13 parts of ammonia in 1.77 parts of deionised water. After 5 minutes a solution of 0.11 parts of ammonium persulphate in 0.88 parts of deionised water and a solution of 0.05 parts of sodium formaldehyde sulphoxylate in 0.88 parts of deionised water were added and stirred for 15 minutes. A solution of 0.11 parts of tertiary-butylhydroperoxide in 0.88 parts of deionised water was added, followed by a solution of 0.26 parts of ammonia in 0.26 parts of deionised water. The reactor was cooled to < 30°C, and the resultant latex filtered through a 100 mesh nylon filter to remove any coagulum. The resultant latex had a solids content of 51.29%, pH of 4.8 and a viscosity of 1.15 Pa.s at 25°C.

### Example 2

The procedure for example 1 was followed, except that the paraffin wax used had a melting point of 51-54°C. The resultant latex had a solids content of 51.71%, pH of 5.0 and a viscosity of 2.52 Pa.s.

### Example 3

The procedure for example 1 was followed, except that the paraffin wax used had a melting point of 60-63°C. The resultant latex had a solids content of 52.37%, pH of 5.1 and a viscosity of 2.54 Pa.s.

### Example 4

The procedure for example 1 was followed, except that only 0.50 parts of paraffin wax was dissolved in monomer phase "A". The resultant latex had a solids content of 50.12%, pH of 5.0 and a viscosity of 1.17 Pa.s.

### Example 5

The procedure for example 1 was followed, except that only 0.25 parts of paraffin wax was dissolved in monomer phase "A". The resultant latex had a solids content of 50.43%, pH of 4.8 and a viscosity of 1.46 Pa.s.

### Example 6

The procedure for example 1 was followed, except that 2.00 parts of a 50% solids aqueous dispersion of a paraffin wax having a melting point of 60-63°C was added to the monomer phase "A", and water phase "B" consisted of 5.71 parts of a 70% solution of a nonionic surfactant, (a nonylphenol ethoxylate containing 30 moles of ethylene oxide) , dissolved in 39.70 parts of deionised water. The resultant latex had 51.59% solids, pH of 4.3 and viscosity of 1.73 Pa.s.

### Example 7

The procedure for example 6 was followed, except that the 2.00 parts of a 50% solids aqueous dispersion of paraffin wax was added to the water phase "B", consisting of 5.71 parts of a 70% solution of a nonionic surfactant dissolved in 39.70 parts of deionised water. The resultant latex had 51.58% solids, pH of 4.6 and viscosity of 1.80 Pa.s.

### Example 8

The procedure for example 7 was followed, except that 4.00 parts of the 50% solids aqueous dispersion of paraffin wax was added to the water phase "B", (consisting of 5.71 parts of a 70% solution of a nonionic surfactant dissolved in 39.70 parts of deionised water). Additionally, the first stage initiator solutions contained 3.53 parts of deionised water instead of 0.88 parts. The resultant latex had 48.51% solids, pH of 4.3 and viscosity of 0.54 Pa.s.

### Example 9

The procedure of example 1 was followed except that monomer phase "A" was made as follows. 1.00 part of a paraffin wax having a melting point of 57-60°C was dissolved in 50.0 parts of styrene, after which 45.00 parts of 2-ethylhexyl acrylate, 4.00 parts of acrylic acid and 4.00 parts of a nonionic surfactant, (a nonylphenol ethoxylate containing 9 moles of ethylene oxide), were added. The resultant latex had 50.90% solids, pH of 3.6 and a viscosity of 2.10 Pa.s.

### Example 10

The procedure of example 1 was followed except that monomer phase "A" consisted of 50.0 parts of styrene, 45.00 parts of 2-ethylhexyl acrylate, 4.00 parts of acrylic acid and 4.00 parts of nonionic surfactant, (a nonylphenol ethoxylate containing 9 moles of ethylene oxide). 2.00 parts of a 50% solids aqueous dispersion of a paraffin wax having a melting point of 60-63°C were added to water phase "B", consisting of a solution of 5.71 parts of a 70 % solution of a nonionic surfactant, (a nonylphenol ethoxylate containing 30 moles of ethylene oxide) dissolved in 39.70 parts of deionised water. The resultant latex had 52.62% solids, pH of 4.2 and a viscosity of 1.60 Pa.s.

### Example 11

The procedure of example 10 was followed except that monomer phase "A" consisted of 30.50 parts of styrene, 54.50 parts of butyl acrylate, 10.00 parts of methyl methacrylate, 4.00 parts of acrylic acid and 4.00 parts of nonionic surfactant, (a nonylphenol ethoxylate containing 9 moles of ethylene oxide). The resultant latex had 51.25% solids, pH of 4.7 and a viscosity of 2.08 Pa.s.

### Comparative Example 1

The procedure of example 10 was followed except that monomer phase "A" consisted of 54.50 parts of butyl acrylate, 40.50 parts of methyl methacrylate, 4.00 parts of acrylic acid and 4.00 parts of nonionic surfactant, (a nonylphenol ethoxylate containing 9 moles of ethylene oxide). The resultant latex had 51.72% solids, pH of 5.5 and a viscosity of 1.25 Pa.s.

### Comparative Example 2

The procedure of example 1 was followed, except that no paraffin wax was added to monomer phase "A". The resultant latex had 50.61% solids, pH of 5.1 and viscosity of 0.89 Pa.s.

### Comparative Example 3

1.00 part of a 50% solids aqueous dispersion of a paraffin wax having a melting point of 60-63°C was added to 100 parts of the latex of comparative example 1.
Films of the latices of Example 1, Comparative Example 2 and Comparative Example 3, and the paraffin wax emulsion were examined by Differential Scanning Calorimetry on a Perkin Elmer DSC 4 scanning at 10°C per minute over a range of 0-80°C. The enthalpy curve of the latex of Comparative Example 1 showed no characteristics except for a softening point at approximately 10°C. The paraffin wax emulsion showed a typical paraffin wax enthalpy curve with a peak at 65.9°C. The DSC trace of a film of the latex of Comparative Example 3 showed a peak at 66.7°C with an enthalpy figure typical of 1% of wax mixed with a polymer. The DSC curve of the latex of Example 1 showed a wax melt peak, but the enthalpy was reduced to less than 25% of that of the theoretical wax/polymer mix, and the peak temperature was reduced to 49.5°C.

The latices of Example 1 and Comparative Example 3 were extracted with cyclohexane, and the extracts analysed by Gas Liquid Chromatography on a Perkin Elmer 8320 GLC using a high temperature capillary column with non-polar stationary phase. Comparison of the GLC results for the extract of Example 1 with that of Comparative Example 3 showed that 80 to 90% of the wax in the latex of Example 1 is not available for extraction. It would appear from these two pieces of evidence that the polymer latex of Example 1 might have formed a grafted copolymer with the wax.

The hydrophobic character of the latices of the invention was shown by measurement of the contact angle of water droplets on a polymer film, water vapour transmission rates through coated kraft paper and water absorption of coated kraft paper, and these measurements are tabulated in the table.

Polymer films of 10 thou (0.25 mm) wet thickness were cast on microscope slides and allowed to dry at 15 ± 5°C for 7 days. Droplets of deionised water of approximately 0.006 g in weight were dropped from a micrometer syringe at a height of 9 mm above the film, and the image of the droplet projected on a screen. The dimensions of the image were measured, and the contact angle determined from tables of 2r/h, (where r = radius and h = height of the drop). Contact angles quoted are the average of five measurements.

Polymer latices were applied at a dry coating weight of 10-12 gm⁻² to 150 gm⁻² virgin kraft paper using a wire wound "Mayer bar" on an automated laboratory R.K. Coater, Model KCC 202. Coated papers were dried at 15 ± 5°C for 3 days. The Water Vapour Transmission Rate (WVTR) was measured at a temperature of 25 ± 0.5°C and 75 ± 2 % relative humidity according to BS 3177:1959, (Method for determining the Permeability to water vapour of flexible sheet materials used for packaging), and is expressed as grams per square metre per day. The "Mayer bar" is described in "Coatings Technology Handbook", Ed. D. Satas, Marcel Dekker 1991, Chapter 10.

The Cobb value was measured according to BS 2644:1980, (Method for Determination of Water Absorption of paper and board), and is the mass of water absorbed by 1 m² of the substrate at 15 ± 5 °C over 30 minutes, expressed as grams per square metre.

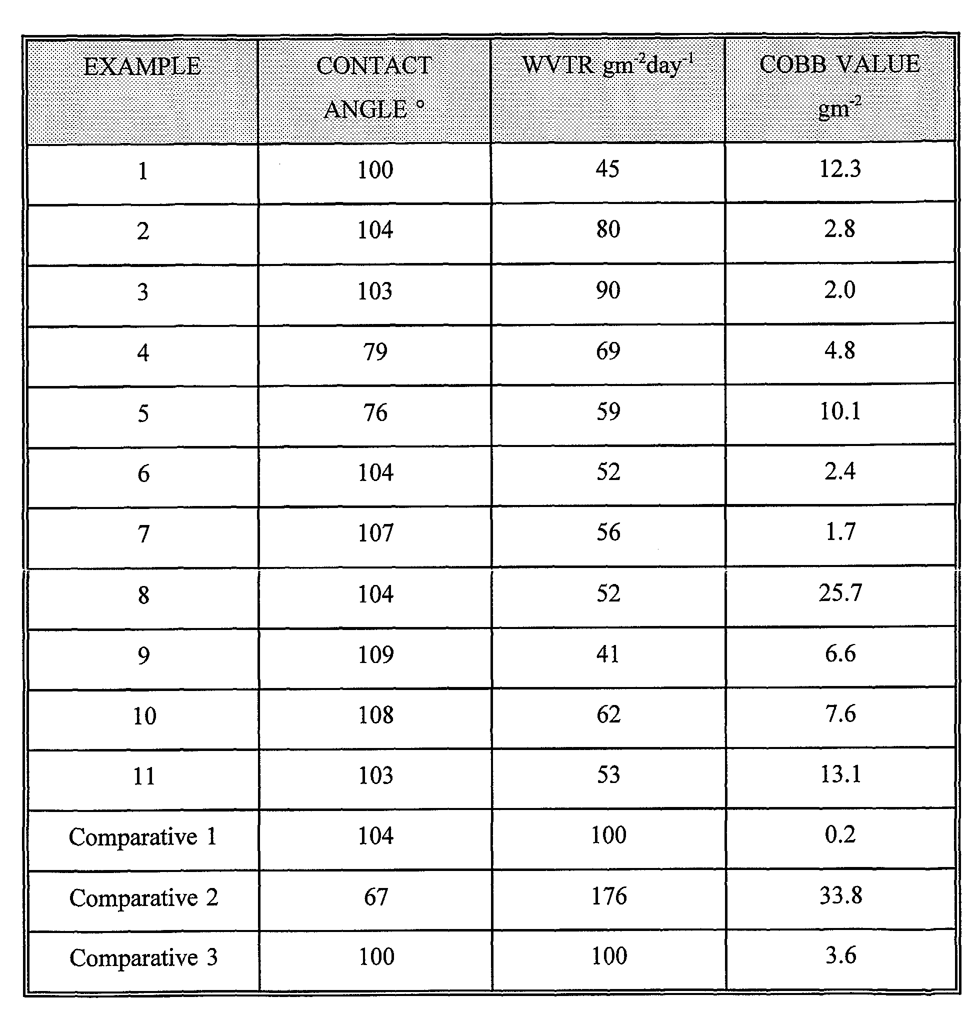

## Claims (Claims for the following Contracting State(s): AT, BE, CH, ES, GB, GR, IE, IT, LI, NL, PT, SE)

1. The use of a polymer obtainable by emulsion or suspension polymerisation of a mixture of ethylenically unsaturated monomers comprising:
(1) 35-98 parts by weight (calculated on the total amount of monomers in the mixture) of C1-C18 alkyl(meth)acrylate;
(2) 0.05-5 parts of C3 - C8 unsaturated carboxylic acid;
(3) 1-60 parts by weight of a vinyl aromatic monomer and which mixture is substantially free from C3-C8 conjugated diolefins,
in the presence of 0.01 to 5 wt% calculated on the monomers of a hydrocarbon wax obtainable by petroleum refining or by Fischer-Tropsch synthesis having a melting point of 25 to 125°C which wax is incorporated in the polymer during polymerization for coating a substrate comprising paper, carton, board, organic fibres, wood, wood composites and non-woven textiles with said polymer in order to impart or improve hydrophobicity and/or moisture vapour resistance and as to obtain a coated, recyclable and repulpable substrate.

2. Process for imparting or improving hydrophobicity and/or moisture vapour resistance whilst retaining recyclability and repulpability of a substrate comprising paper, carton, board, organic fibres, wood, wood composites and non-woven textiles which comprises coating the substrate with a polymer obtainable by emulsion or suspension polymerisation of a mixture of ethylenically unsaturated monomers comprising:
(1) 35-98 parts by weight (calculated on the total amount of monomer in the mixture) of C1-C18 alkyl(meth)acrylate;
(2) 0.05-5 parts of C3 - C8 unsaturated carboxylic acid;
(3) 1-60 parts by weight of a vinyl aromatic monomer and which mixture is substantially free from C3-C8 conjugated diolefins,
in the presence of 0.01 to 5 wt% calculated on the monomers of a hydrocarbon wax obtainable by petroleum refining or by Fischer-Tropsch synthesis having a melting point of 25 to 125°C incorporated in the polymer during polymerization.

3. Repulpable and recyclable substrate comprising paper, carton, board, organic fibres, wood, wood composites and non-woven textiles with improved hydrophobicity and/or moisture vapour resistance which is coated with a polymer obtainable by emulsion or suspension polymerisation of a mixture of ethylenically unsaturated monomers comprising:
(1) 35-98 parts by weight (calculated on the total amount of monomer in the mixture) of C1-C18 alkyl(meth)acrylate;
(2) 0.05-5 parts of C3 - C8 unsaturated carboxylic acid;
(3) 1-60 parts by weight of a vinyl aromatic monomer and which mixture is substantially free from C3-C8 conjugated diolefins,
in the presence of 0.01 to 5 wt% calculated on the monomers of a hydrocarbon wax obtainable by petroleum refining or by Fischer-Tropsch synthesis having a melting point of 25 to 125°C incorporated in the polymer during polymerization.

4. A polymer obtainable by emulsion or suspension technique comprising polymerising a mixture of monomers comprising:
(1) 46-65.5 parts by weight (calculated on the total amount of monomer in the mixture) of C1-C18 alkyl(meth)acrylate;
(2) 0.05-5 parts of C3 - C8 unsaturated carboxylic acid;
(3) 30.5-50 parts by weight of a vinyl aromatic monomer and which mixture is substantially free from C3-C8 conjugated diolefins,
in the presence of 0.01 to 5 wt% calculated on the monomers of a hydrocarbon wax obtainable by petroleum refining or by Fischer-Tropsch synthesis having a melting point of 25 to 125°C.

5. The use of a polymer according to claim 1, in which the mixture of monomers which is polymerised comprises styrene and/or α-methylstyrene, butyl acrylate and/or 2-ethylhexylacrylate and (meth)acrylic acid.

6. Process according to claim 2, in which the mixture of monomers which is polymerised comprises styrene and/or α-methylstyrene, butyl acrylate and/or 2-ethylhexylacrylate and (meth)acrylic acid.

7. Repulpable and recyclable substrate according to claim 3, in which the mixture of monomers which is polymerised comprises styrene and/or α-methylstyrene, butyl acrylate and/or 2-ethylhexylacrylate and (meth)acrylic acid.

8. A polymer according to claim 4, in which the mixture of monomers which is polymerised comprises styrene and/or α-methylstyrene, butyl acrylate and/or 2-ethylhexylacrylate and (meth)acrylic acid.

9. The use of a polymer according to claim 1 or 5, in which the amount of hydrocarbon wax is from 0.25 to 2 wt% calculated on the amount of monomers and which hydrocarbon wax has a melting point between 40 and 80°C.

10. Process according to claim 2 or 6, in which the amount of hydrocarbon wax is from 0.25 to 2 wt% calculated on the amount of monomers and which hydrocarbon wax has a melting point between 40 and 80°C.

11. Repulpable and recyclable substrate according to claim 3 or 7, in which the amount of hydrocarbon wax is from 0.25 to 2 wt% calculated on the amount of monomers and which hydrocarbon wax has a melting point between 40 and 80°C.

12. Polymer according to claim 4 or 8, in which the amount of hydrocarbon wax is from 0.25 to 2 wt% calculated on the amount of monomers and which hydrocarbon wax has a melting point between 40 and 80°C.

13. The use of a polymer according to claim 1, 5, or 9, in which the substrate comprises paper, carton, board, wood or wood composites.

14. A process according to claim 2, 6 or 10, in which the substrate comprises paper, carton, board, wood or wood composites.

15. Repulpable and recyclable substrate according to claim 3, 7 or 11, in which the substrate comprises paper, carton, board, wood or wood composites.

16. The use of a polymer according to claim 1, 5, 9 or 13, in which the ethylenically unsaturated monomers comprise:
(1) 46-65.5 parts by weight (calculated on the total amount of monomer in the mixture) of C1-C18 alkyl(meth)acrylate;
(2) 0.05-5 parts of C3 - C8 unsaturated carboxylic acid; and
(3) 30.5-50 parts by weight of a vinyl aromatic monomer and which mixture is substantially free from C3-C8 conjugated diolefins.

17. A process according to claim 2, 6, 10 or 14, in which the ethylenically unsaturated monomers comprise:
(1) 46-65.5 parts by weight (calculated on the total amount of monomer in the mixture) of C1-C18 alkyl(meth)acrylate;
(2) 0.05-5 parts of C3 - C8 unsaturated carboxylic acid; and
(3) 30.5-50 parts by weight of a vinyl aromatic monomer and which mixture is substantially free from C3-C8 conjugated diolefins.

18. Repulpable and recyclable substrate according to claim 3 7, 11 or 15, in ethylenically unsaturated monomers comprise
(1) 46-65.5 parts by weight (calculated on the total amount of monomer in the mixture) of C1-C18 alkyl(meth)acrylate;
(2) 0.05-5 parts of C3 - C8 unsaturated carboxylic acid;
(3) 30.5-50 parts by weight of a vinyl aromatic monomer and which mixture is substantially free from C3-C8 conjugated diolefins,

19. A polymer according to claims 4, 8 or 12 which is prepared by introducing the hydrocarbon wax in the polymerization mixture in the form of a solid wax dissolved in monomer or in the form of a wax emulsion/dispersion either in monomer or another extender.

20. A polymeric composition with incorporated hydrocarbon wax according to any of the claims 4, 8, 12 or 19 in the form of a latex or a dispersion.

21. The use of a coated substrate according to claim 3, 7, 11, 15 or 18, in the recycling and repulping of materials.

## Claims (Claims for the following Contracting State(s): DE, DK, FR)

1. The use of a polymer obtainable by emulsion or suspension polymerisation of a mixture of ethylenically unsaturated monomers comprising:
(1) 35-98 parts by weight (calculated on the total amount of monomers in the mixture) of C1-C18 alkyl(meth)acrylate;
(2) 0.05-5 parts of C3 - C8 unsaturated carboxylic acid;
(3) 1-60 parts by weight of a vinyl aromatic monomer and which mixture is substantially free from C3-C8 conjugated diolefins,
in the presence of 0.01 to 5 wt% calculated on the monomers of a hydrocarbon wax obtainable by petroleum refining or by Fischer-Tropsch synthesis having a melting point of 25 to 125°C which wax is incorporated in the polymer during polymerization for coating a substrate comprising paper, carton, board, organic fibres, wood, wood composites and non-woven textiles excluding SUS paper board with said polymer in order to impart or improve hydrophobicity and/or moisture vapour resistance and as to obtain a coated, recyclable and repulpable substrate.

2. Process for imparting or improving hydrophobicity and/or moisture vapour resistance whilst retaining recyclability and repulpability of a substrate comprising paper, carton, board, organic fibres, wood, wood composites and non-woven textiles excluding SUS paper board which comprises coating the substrate with a polymer obtainable by emulsion or suspension polymerisation of a mixture of ethylenically unsaturated monoers comprising:
(1) 35-98 parts by weight (calculated on the total amount of monomer in the mixture) of C1-C18 alkyl(meth)acrylate;
(2) 0.05-5 parts of C3 - C8 unsaturated carboxylic acid;
(3) 1-60 parts by weight of a vinyl aromatic monomer and which mixture is substantially free from C3-C8 conjugated diolefins,
in the presence of 0.01 to 5 wt% calculated on the monomers of a hydrocarbon wax obtainable by petroleum refining or by Fischer-Tropsch synthesis having a melting point of 25 to 125°C incorporated in the polymer during polymerization.

3. Repulpable and recyclable substrate comprising paper, carton, board, organic fibres, wood, wood composites and non-woven textiles excluding SUS paper board with improved hydrophobicity and/or moisture vapour resistance which is coated with a polymer obtainable by emulsion or suspension polymerisation of a mixture of ethylenically unsaturated monomers comprising:
(1) 35-98 parts by weight (calculated on the total amount of monomer in the mixture) of C1-C18 alkyl(meth)acrylate;
(2) 0.05-5 parts of C3 - C8 unsaturated carboxylic acid;
(3) 1-60 parts by weight of a vinyl aromatic monomer and which mixture is substantially free from C3-C8 conjugated diolefins,
in the presence of 0.01 to 5 wt% calculated on the monomers of a hydrocarbon wax obtainable by petroleum refining or by Fischer-Tropsch synthesis having a melting point of 25 to 125°C incorporated in the polymer during polymerization.

4. A polymer obtainable by emulsion or suspension technique comprising polymerising a mixture of monomers comprising:
(1) 46-65.5 parts by weight (calculated on the total amount of monomer in the mixture) of C1-C18 alkyl(meth)acrylate;
(2) 0.05-5 parts of C3 - C8 unsaturated carboxylic acid;
(3) 30.5-50 parts by weight of a vinyl aromatic monomer and which mixture is substantially free from C3-C8 conjugated diolefins,
in the presence of 0.01 to 5 wt% calculated on the monomers of a hydrocarbon wax obtainable by petroleum refining or by Fischer-Tropsch synthesis having a melting point of 25 to 125°C.

5. The use of a polymer according to claim 1, in which the mixture of monomers which is polymerised comprises styrene and/or α-methylstyrene, butyl acrylate and/or 2-ethylhexylacrylate and (meth)acrylic acid.

6. Process according to claim 2, in which the mixture of monomers which is polymerised comprises styrene and/or α-methylstyrene, butyl acrylate and/or 2-ethylhexylacrylate and (meth)acrylic acid.

7. Repulpable and recyclable substrate according to claim 3, in which the mixture of monomers which is polymerised comprises styrene and/or α-methylstyrene, butyl acrylate and/or 2-ethylhexylacrylate and (meth)acrylic acid.

8. A polymer according to claim 4, in which the mixture of monomers which is polymerised comprises styrene and/or α-methylstyrene, butyl acrylate and/or 2-ethylhexylacrylate and (meth)acrylic acid.

9. The use of a polymer according to claim 1 or 5, in which the amount of hydrocarbon wax is from 0.25 to 2 wt% calculated on the amount of monomers and which hydrocarbon wax has a melting point between 40 and 80°C.

10. Process according to claim 2 or 6, in which the amount of hydrocarbon wax is from 0.25 to 2 wt% calculated on the amount of monomers and which hydrocarbon wax has a melting point between 40 and 80°C.

11. Repulpable and recyclable substrate according to claim 3 or 7, in which the amount of hydrocarbon wax is from 0.25 to 2 wt% calculated on the amount of monomers and which hydrocarbon wax has a melting point between 40 and 80°C.

12. Polymer according to claim 4 or 8, in which the amount of hydrocarbon wax is from 0.25 to 2 wt% calculated on the amount of monomers and which hydrocarbon wax has a melting point between 40 and 80°C.

13. The use of a polymer according to claim 1, 5, or 9, in which the substrate comprises paper, carton, board, wood or wood composites.

14. A process according to claim 2, 6 or 10, in which the substrate comprises paper, carton, board, wood or wood composites.

15. Repulpable and recyclable substrate according to claim 3, 7 or 11, in which the substrate comprises paper, carton, board, wood or wood composites.

16. The use of a polymer according to claim 1, 5, 9 or 13, in which the ethylenically unsaturated monomers comprise:
(1) 46-65.5 parts by weight (calculated on the total amount of monomer in the mixture) of C1-C18 alkyl(meth)acrylate;
(2) 0.05-5 parts of C3 - C8 unsaturated carboxylic acid; and
(3) 30.5-50 parts by weight of a vinyl aromatic monomer and which mixture is substantially free from C3-C8 conjugated diolefins.

17. A process according to claim 2, 6, 10 or 14, in which the ethylenically unsaturated monomers comprise:
(1) 46-65.5 parts by weight (calculated on the total amount of monomer in the mixture) of C1-C18 alkyl(meth)acrylate;
(2) 0.05-5 parts of C3 - C8 unsaturated carboxylic acid; and
(3) 30.5-50 parts by weight of a vinyl aromatic monomer and which mixture is substantially free from C3-C8 conjugated diolefins.

18. Repulpable and recyclable substrate according to claim 3 7, 11 or 15, in which the ethylenically unsaturated monomers comprises:
(1) 46-65.5 parts by weight (calculated on the total amount of monomer in the mixture) of C1-C18 alkyl(meth)acrylate;
(2) 0.05-5 parts of C3 - C8 unsaturated carboxylic acid;
(3) 30.5-50 parts by weight of a vinyl aromatic monomer and which mixture is substantially free from C3-C8 conjugated diolefins,

19. A polymer according to claims 4, 8 or 12 which is prepared by introducing the hydrocarbon wax in the polymerization mixture in the form of a solid wax dissolved in monomer or in the form of a wax emulsion/dispersion either in monomer or another extender.

20. A polymeric composition with incorporated hydrocarbon wax according to any of the claims 4, 8, 12 or 19 in the form of a latex or a dispersion.

21. The use of a coated substrate according to claim 3, 7, 11, 15 or 18, in the recycling and repulping of materials without disclaiming the use of coated SUS paper board.

## Patentansprüche (Patentansprüche für folgende(n) Vertragsstaat(en): AT, BE, CH, ES, GB, GR, IR, IT, LI, NL, PT, SE)

1. Verwendung eines Polymers, erhältlich durch Emulsions- oder Suspensionspolymerisation einer Mischung ethylenisch ungesättigter Monomere, umfassend:
(1) 35 bis 98 Gewichtsteile (bezogen auf die Gesamtmenge der Monomeren in der Mischung) C1-C18-Alkyl(meth)acrylat,
(2) 0,05 bis 5 Teile ungesättigte C3-C8-Carbonsäure,
(3) 1 bis 60 Gewichtsteile eines vinylaromatischen Monomers,
und wobei die Mischung im wesentlichen frei von konjugierten C3-C8-Diolefinen ist,
in Gegenwart von 0,01 bis 5 Gew.-%, bezogen auf die Monomeren, eines Kohlenwasserstoffwachses mit einem Schmelzpunkt von 25 bis 125°C, erhältlich durch Petroleumraffinierung oder Fischer-Tropsch-Synthese, wobei das Wachs dem Polymer während der Polymersation einverleibt wird, um ein Substrat, umfassend Papier, Karton, Pappe, organische Fasern, Holz, Holz-Komposite und nichtgewebte Textilien, mit dem Polymer zu beschichten, um dem Substrat Hydrophobie und/oder Resistenz gegen Wasserdampf zu verleihen oder diese zu verbessern und um ein beschichtetes, recycelbares und wiederaufarbeitbares Substrat zu erhalten.

2. Verfahren zum Verleihen von oder zum Verbessern der Hydrophobie und/oder Resistenz gegen Wasserdampf eines Substrates, umfassend Papier, Karton, Pappe, organische Fasern, Holz, Holz-Komposite und nichtgewebte Textilien, wobei das Substrat recycel- und wiederaufarbeitbar bleibt, welches das Beschichten des Substrats mit einem Polymer umfaßt, das durch Emulsions- oder Suspensionspolymerisation einer Mischung aus ethylenisch ungesättigten Monomeren erhältlich ist, umfassend:
(1) 35 bis 98 Gewichtsteile (bezogen auf die Gesamtmenge der Monomeren in der Mischung) C1-C18-Alkyl(meth)acrylat,
(2) 0,05 bis 5 Teile ungesättigte C3-C8-Carbonsäure,
(3) 1 bis 60 Gewichtsteile eines vinylaromatischen Monomers,
und wobei die Mischung im wesentlichen frei von konjugierten C3-C8-Diolefinen ist,
in Gegenwart von 0,01 bis 5 Gew.-%, bezogen auf die Monomeren, eines Kohlenwasserstoffwachses mit einem Schmelzpunkt von 25 bis 125°C, erhältlich durch Petroleumraffinierung oder Fischer-Tropsch-Synthese, das dem Polymer während der Polymerisation einverleibt wird.

3. Wiederaufarbeitbares und recycelbares Substrat, umfassend Papier, Karton, Pappe, organische Fasern, Holz, Holz-Komposite und nichtgewebte Textilien mit verbesserter Hydrophobie und/oder Resistenz gegen Wasserdampf, welches mit einem Polymer beschichtet ist, das durch Emulsions- oder Suspensionspolymerisation einer Mischung ethylenisch ungesättigter Monomere erhältlich ist, umfassend:
(1) 35 bis 98 Gewichtsteile (bezogen auf die Gesamtmenge der Monomeren in der Mischung) C1-C18-Alkyl(meth)acrylat,
(2) 0,05 bis 5 Teile ungesättigte C3-C8-Carbonsäure,
(3) 1 bis 60 Gewichtsteile eines vinylaromatischen Monomers,
und wobei die Mischung im wesentlichen frei von konjugierten C3-C8-Diolefinen ist,
in Gegenwart von 0,01 bis 5 Gew.-%, bezogen auf die Monomeren, eines Kohlenwasserstoffwachses mit einem Schmelzpunkt von 25 bis 125°C, erhältlich durch Petroleumraffinierung oder Fischer-Tropsch-Synthese, das dem Polymer während der Polymerisation einverleibt wird.

4. Polymer, erhältlich durch Emulsions- oder Suspensionstechnik, umfassend das Polymerisieren einer Mischung aus Monomeren, umfassend:
(1) 46 bis 65,6 Gewichtsteile (bezogen auf die Gesamtmenge der Monomere in der Mischung) C1-C18-Alkyl(meth)acrylat,
(2) 0,05 bis 5 Teile ungesättigte C3-C8-Carbonsäure,
(3) 30,5 bis 50 Gewichtsteile eines vinylaromatischen Monomers,
und wobei die Mischung im wesentlichen frei von konjugierten C3-C8-Diolefinen ist,
in Gegenwart von 0,01 bis 5 Gew.-%, bezogen auf die Monomeren, eines Kohlenwasserstoffwachses mit einem Schmelzpunkt von 25 bis 125°C, erhältlich durch Petroleumraffinierung oder Fischer-Tropsch-Synthese.

5. Verwendung eines Polymers nach Anspruch 1, worin die Mischung der Polymeren, die polymerisiert wird, Styrol und/oder α-Methylstyrol, Butylacrylat und/oder 2-Ethylhexylacrylat und (Meth)acrylsäure umfaßt.

6. Verfahren nach Anspruch 2, wobei die Mischung der Monomeren, die polymerisiert werden, Styrol und/oder α-Methylstyrol, Butylacrylat und/oder 2-Ethylhexylacrylat und (Meth)acrylsäure umfaßt.

7. Wiederaufarbeitbares und recycelbares Substrat nach Anspruch 3, worin die Mischung der Monomeren, die polymerisiert werden, Styrol und/oder α-Methylstyrol, Butylacrylat und/oder 2-Ethylhexylacrylat und (Meth)acrylsäure umfaßt.

8. Polymer nach Anspruch 4, worin die Mischung der Monomeren, die polymerisiert werden, Styrol und/oder α-Methylstyrol, Butylacrylat und/oder 2-Ethylhexylacrylat und (Meth)acrylsäure umfaßt.

9. Verwendung eines Polymers nach Anspruch 1 oder 5, wobei die Menge des Kohlenwasserstoffwachses 0,25 bis 2 Gew.-%, bezogen auf die Menge der Monomeren, beträgt, und das Kohlenwasserstoffwachs einen Schmelzpunkt zwischen 40 und 80°C hat.

10. Verfahren nach Anspruch 2 oder 6, wobei die Menge des Kohlenwasserstoffwachses 0,25 bis 2 Gew.-%, bezogen auf die Menge der Monomeren, beträgt, und das Kohlenwasserstoffwachs einen Schmelzpunkt zwischen 40 und 80°C hat.

11. Wiederaufarbeitbares und recycelbares Substrat nach Anspruch 3 oder 7, worin die Menge des Kohlenwasserstoffwachses 0,25 bis 2 Gew.-%, bezogen auf die Menge der Monomeren, beträgt, und das Kohlenwasserstoffwachs einen Schmelzpunkt zwischen 40 und 80°C hat.

12. Polymer nach Anspruch 4 oder 8, worin die Menge des Kohlenwasserstoffwachses 0,25 bis 2 Gew.-%, bezogen auf die Menge der Monomeren, beträgt, und das Kohlenwasserstoffwachs einen Schmelzpunkt zwischen 40 und 80°C hat.

13. Verwendung eines Polymers nach Anspruch 1, 5 oder 9, wobei das Substrat Papier, Karton, Pappe, Holz oder Holz-Komposite umfaßt.

14. Verfahren nach Anspruch 2, 6 oder 10, wobei das Substrat Papier, Karton, Pappe, Holz oder Holz-Komposite umfaßt.

15. Wiederaufarbeitbares und recycelbares Substrat nach Anspruch 3, 7 oder 11, wobei das Substrat Papier, Karton, Pappe, Holz oder Holz-Komposite umfaßt.

16. Verwendung eines Polymers nach Anspruch 1, 5, 9 oder 13, wobei die ethylenisch ungesättigte Monomeren umfassen:
(1) 46 bis 65,6 Gewichtsteile (bezogen auf die Gesamtmenge der Monomeren in der Mischung) C1-C18-Alkyl(meth)acrylat,
(2) 0,05 bis 5 Teile ungesättigte C3-C8-Carbonsäure,
(3) 30,5 bis 50 Gewichtsteile eines vinylaromatischen Monomers,
und wobei die Mischung im wesentlichen frei von konjugierten C3-C8-Diolefinen ist.

17. Verfahren nach Anspruch 2, 6, 10 oder 14, wobei die ethylenisch ungesättigten Monomere umfassen:
(1) 46 bis 65, 6 Gewichtsteile (bezogen auf die Gesamtmenge der Monomeren in der Mischung) C1-C18-Alkyl(meth)acrylat,
(2) 0,05 bis 5 Teile ungesättigte C3-C8-Carbonsäure,
(3) 30,5 bis 50 Gewichtsteile eines vinylaromatischen Monomers,
und wobei die Mischung im wesentlichen frei von konjugierten C3-C8-Diolefinen ist.

18. Wiederaufarbeitbares und recycelbares Substrat nach Anspruch 3, 7, 11 oder 15, worin die ethylenisch ungesättigten Monomeren umfassen:
(1) 46 bis 65, 6 Gewichtsteile (bezogen auf die Gesamtmenge der Monomeren in der Mischung) C1-C18-Alkyl(meth)acrylat,
(2) 0,05 bis 5 Teile ungesättigte C3-C8-Carbonsäure,
(3) 30,5 bis 50 Gewichtsteile eines vinylaromatischen Monomers,
und wobei die Mischung im wesentlichen frei von konjugierten C3-C8-Diolefinen ist.

19. Polymer nach den Ansprüchen 4, 8 oder 12, hergestellt durch Einführen des Kohlenwasserstoffwachses in die Polymerisationsmischung in Form eines im Monomer gelösten festen Wachses oder in Form einer Wachs-Emulsion/Dispersion, entweder im Monomer oder einem anderen Extender.

20. Polymerzusammensetzung mit einem einverleibten Kohlenwasserstoffwachs nach irgendeinem der Ansprüche 4, 8, 12 oder 19 in Form eines Latex oder einer Dispersion.

21. Verwendung eines beschichteten Substrats nach Anspruch 3, 7, 11, 15 oder 18 beim Recyceln und Wiederaufarbeiten von Materialien.

## Patentansprüche (Patentansprüche für folgende(n) Vertragsstaat(en): DE, DK, FR)

1. Verwendung eines Polymers, erhältlich durch Emulsions- oder Suspensionspolymerisation einer Mischung ethylenisch ungesättigter Monomere, umfassend:
(1) 35 bis 98 Gewichtsteile (bezogen auf die Gesamtmenge der Monomeren in der Mischung) C1-C18-Alkyl(meth)acrylat,
(2) 0,05 bis 5 Teile ungesättigte C3-C8-Carbonsäure,
(3) 1 bis 60 Gewichtsteile eines vinylaromatischen Monomers,
und wobei die Mischung im wesentlichen frei von konjugierten C3-C8-Diolefinen ist,
in Gegenwart von 0,01 bis 5 Gew.-%, bezogen auf die Monomeren, eines Kohlenwasserstoffwachses mit einem Schmelzpunkt von 25 bis 125°C, erhältlich durch Petroleumraffinierung oder Fischer-Tropsch-Synthese, wobei das Wachs dem Polymer während der Polymersation einverleibt wird, um ein Substrat, umfassend Papier, Karton, Pappe, organische Fasern, Holz, Holz-Komposite und nichtgewebte Textilien, ausschließlich SUS-Vollpappe mit dem Polymer zu beschichten, um dem Substrat Hydrophobie und/oder Resistenz gegen Wasserdampf zu verleihen oder diese zu verbessern und um ein beschichtetes, recycelbares und wiederaufarbeitbares Substrat zu erhalten.

2. Verfahren zum Verleihen von oder zum Verbessern der Hydrophobie und/oder Resistenz gegen Wasserdampf eines Substrates, umfassend Papier, Karton, Pappe, organische Fasern, Holz, Holz-Komposite und nichtgewebte Textilien, ausschließlich SUS-Vollpappe, wobei das Substrat recycel- und wiederaufarbeitbar bleibt, welches das Beschichten des Substrats mit einem Polymer umfaßt, das durch Emulsions- oder Suspensionspolymerisation einer Mischung aus ethylenisch ungesättigten Monomeren erhältlich ist, umfassend:
(1) 35 bis 98 Gewichtsteile (bezogen auf die Gesamtmenge der Monomeren in der Mischung) C1-C18-Alkyl(meth)acrylat,
(2) 0,05 bis 5 Teile ungesättigte C3-C8-Carbonsäure,
(3) 1 bis 60 Gewichtsteile eines vinylaromatischen Monomers,
und wobei die Mischung im wesentlichen frei von konjugierten C3-C8-Diolefinen ist,
in Gegenwart von 0,01 bis 5 Gew.-%, bezogen auf die Monomeren, eines Kohlenwasserstoffwachses mit einem Schmelzpunkt von 25 bis 125°, erhältlich durch Petroleumraffinierung oder Fischer-Tropsch-Synthese, das dem Polymer während der Polymerisation einverleibt wird.

3. Wiederaufarbeitbares und recycelbares Substrat, umfassend Papier, Karton, Pappe, organische Fasern, Holz, Holz-Komposite und nichtgewebte Textilien, ausschließlich SUS-Vollpappe mit verbesserter Hydrophobie und/oder Resistenz gegen Wasserdampf, welches mit einem Polymer beschichtet ist, das durch Emulsions- oder Suspensionspolymerisation einer Mischung ethylenisch ungesättigter Monomere erhältlich ist, umfassend:
(1) 35 bis 98 Gewichtsteile (bezogen auf die Gesamtmenge der Monomeren in der Mischung) C1-C18-Alkyl(meth)acrylat,
(2) 0,05 bis 5 Teile ungesättigte C3-C8-Carbonsäure,
(3) 1 bis 60 Gewichtsteile eines vinylaromatischen Monomers,
und wobei die Mischung im wesentlichen frei von konjugierten C3-C8-Diolefinen ist,
in Gegenwart von 0,01 bis 5 Gew.-%, bezogen auf die Monomeren, eines Kohlenwasserstoffwachses mit einem Schmelzpunkt von 25 bis 125°C, erhältlich durch Petroleumraffinierung oder Fischer-Tropsch-Synthese, das dem Polymer während der Polymerisation einverleibt wird.

4. Polymer, erhältlich durch Emulsions- oder Suspensionstechnik, umfassend das Polymerisieren einer Mischung aus Monomeren, umfassend:
(1) 46 bis 65,6 Gewichtsteile (bezogen auf die Gesamtmenge der Monomere in der Mischung) C1-C18-Alkyl(meth)acrylat,
(2) 0,05 bis 5 Teile ungesättigte C3-C8-Carbonsäure,
(3) 30,5 bis 50 Gewichtsteile eines vinylaromatischen Monomers,
und wobei die Mischung im wesentlichen frei von konjugierten C3-C8-Diolefinen ist,
in Gegenwart von 0,01 bis 5 Gew.-%, bezogen auf die Monomeren eines Kohlenwasserstoffwachses mit einem Schmelzpunkt von 25 bis 125°C, erhältlich durch Petroleumraffinierung oder Fischer-Tropsch-Synthese.

5. Verwendung eines Polymers nach Anspruch 1, worin die Mischung der Polymeren, die polymerisiert wird, Styrol und/oder α-Methylstyrol, Butylacrylat und/oder 2-Ethylhexylacrylat und (Meth)acrylsäure umfaßt.

6. Verfahren nach Anspruch 2, wobei die Mischung der Monomeren, die polymerisiert werden, Styrol und/oder α-Methylstyrol, Butylacrylat und/oder 2-Ethylhexylacrylat und (Meth)acrylsäure umfaßt.

7. Wiederaufarbeitbares und recycelbares Substrat nach Anspruch 3, worin die Mischung der Monomeren, die polymerisiert werden, Styrol und/oder α-Methylstyrol, Butylacrylat und/oder 2-Ethylhexylacrylat und (Meth)acrylsäure umfaßt.

8. Polymer nach Anspruch 4, worin die Mischung der Monomeren, die polymerisiert werden, Styrol und/oder α-Methylstyrol, Butylacrylat und/oder 2-Ethylhexylacrylat und (Meth)acrylsäure umfaßt.

9. Verwendung eines Polymers nach Anspruch 1 oder 5, wobei die Menge des Kohlenwasserstoffwachses 0,25 bis 2 Gew.-%, bezogen auf die Menge der Monomeren, beträgt, und das Kohlenwasserstoffwachs einen Schmelzpunkt zwischen 40 und 80°C hat.

10. Verfahren nach Anspruch 2 oder 6, wobei die Menge des Kohlenwasserstoffwachses 0,25 bis 2 Gew.-%, bezogen auf die Menge der Monomeren, beträgt, und das Kohlenwasserstoffwachs einen Schmelzpunkt zwischen 40 und 80°C hat.

11. Wiederaufarbeitbares und recycelbares Substrat nach Anspruch 3 oder 7, worin die Menge des Kohlenwasserstoffwachses 0,25 bis 2 Gew.-%, bezogen auf die Menge der Monomeren, beträgt, und das Kohlenwasserstoffwachs einen Schmelzpunkt zwischen 40 und 80°C hat.

12. Polymer nach Anspruch 4 oder 8, worin die Menge des Kohlenwasserstoffwachses 0,25 bis 2 Gew.-%, bezogen auf die Menge der Monomeren, beträgt, und das Kohlenwasserstoffwachs einen Schmelzpunkt zwischen 40 und 80°C hat.

13. Verwendung eines Polymers nach Anspruch 1, 5 oder 9, wobei das Substrat Papier, Karton, Pappe, Holz oder Holz-Komposite umfaßt.

14. Verfahren nach Anspruch 2, 6 oder 10, wobei das Substrat Papier, Karton, Pappe, Holz oder Holz-Komposite umfaßt.

15. Wiederaufarbeitbares und recycelbares Substrat nach Anspruch 3, 7 oder 11, wobei das Substrat Papier, Karton, Pappe, Holz oder Holz-Komposite umfaßt.

16. Verwendung eines Polymers nach Anspruch 1, 5, 9 oder 13, wobei die ethylenisch ungesättigte Monomeren umfassen:
(1) 46 bis 65, 6 Gewichtsteile (bezogen auf die Gesamtmenge der Monomeren in der Mischung) C1-C18-Alkyl(meth)acrylat,
(2) 0,05 bis 5 Teile ungesättigte C3-C8-Carbonsäure,
(3) 30,5 bis 50 Gewichtsteile eines vinylaromatischen Monomers,
und wobei die Mischung im wesentlichen frei von konjugierten C3-C8-Diolefinen ist.

17. Verfahren nach Anspruch 2, 6, 10 oder 14, wobei die ethylenisch ungesättigten Monomere umfassen:
(1) 46 bis 65,6 Gewichtsteile (bezogen auf die Gesamtmenge der Monomeren in der Mischung) C1-C18-Alkyl(meth)acrylat,
(2) 0,05 bis 5 Teile ungesättigte C3-C8-Carbonsäure,
(3) 30,5 bis 50 Gewichtsteile eines vinylaromatischen Monomers,
und wobei die Mischung im wesentlichen frei von konjugierten C3-C8-Diolefinen ist.

18. Wiederaufarbeitbares und recycelbares Substrat nach Anspruch 3, 7, 11 oder 15, worin die ethylenisch ungesättigten Monomeren umfassen:
(1) 46 bis 65,6 Gewichtsteile (bezogen auf die Gesamtmenge der Monomeren in der Mischung) C1-C18-Alkyl(meth)acrylat,
(2) 0,05 bis 5 Teile ungesättigte C3-C8-Carbonsäure,
(3) 30,5 bis 50 Gewichtsteile eines vinylaromatischen Monomers,
und wobei die Mischung im wesentlichen frei von konjugierten C3-C8-Diolefinen ist.

19. Polymer nach den Ansprüchen 4, 8 oder 12, hergestellt durch Einführen des Kohlenwasserstoffwachses in die Polymerisationsmischung in Form eines im Monomer gelösten festen Wachses oder in Form einer Wachs-Emulsion/Dispersion, entweder im Monomer oder einem anderen Extender.

20. Polymerzusammensetzung mit einem einverleibten Kohlenwasserstoffwachs nach irgendeinem der Ansprüche 4, 8, 12 oder 19 in Form eines Latex oder einer Dispersion.

21. Verwendung beschichteter Substrate nach Anspruch 3, 7, 11, 15 oder 18 zum Recyclen und Wiederaufarbeiten von Materialien, ohne die Verwendung von beschichteter SUS-Vollpappe auszuschließen.

## Revendications (Revendications pour l'(les) Etat(s) contractant(s) suivant(s): AT, BE, CH, ES, GB, GR, IR, IT, LI, NL, PT, SE)

1. Utilisation d'un polymère pouvant être obtenu par polymérisation en émulsion ou en suspension d'un mélange de monomères éthyléniquement insaturés comprenant :
(1) 35-98 parties en poids (calculé par rapport à la quantité totale de monomères dans le mélange) de (meth)acrylate d'alkyle en C₁₋₁₈ ;
(2) 0,05-5 parties d'acide carboxylique insaturé en C₃₋₈ ;
(3) 1-60 parties en poids d'un monomère aromatique vinylique ce mélange étant pratiquement dépourvu de di-oléfines conjuguées en C₃₋₈,
en présence de 0,01 à 5% en poids, calculé par rapport à la quantité de monomères, d'une cire hydrocarbonée pouvant être obtenue par raffinage de pétrole ou synthèse de Fischer-Tropsch, ayant un point de fusion de 25 à 125°C, cette cire étant incorporée dans le polymère au cours de la polymérisation pour revêtir un substrat comprenant du papier, du carton, des fibres organiques, du bois, des composites de bois et des textiles non tissés, dudit polymère afin de conférer ou d'améliorer l'hydrophobicité et/ou la résistance à la vapeur, et afin d'obtenir un substrat revêtu, recyclable et désintégrable.

2. Procédé permettant de conférer ou d'améliorer l'hydrophobicité et/ou la résistance à la vapeur, tout en conservant l'aptitude au recyclage et à la désintégration d'un substrat comprenant du papier, du carton, des fibres organiques, du bois, des composites de bois et des textiles non tissés, qui comprend le revêtement du substrat par le polymère pouvant être obtenu par polymérisation en émulsion ou en suspension d'un mélange de monomères éthyléniquement insaturés comprenant:
(1) 35-98 parties en poids (calculé par rapport à la quantité totale de monomères dans le mélange) de (meth)acrylate d'alkyle en C₁₋₁₈ ;
(2) 0,05-5 parties d'acide carboxylique insaturé en C₃₋₈ ;
(3) 1-60 parties en poids d'un monomère aromatique vinylique, ce mélange étant pratiquement dépourvu de di-oléfines conjuguées en C₃₋₈,
en présence de 0,01 à 5% en poids, calculé par rapport à la quantité de monomères, d'une cire hydrocarbonée pouvant être obtenue par raffinage de pétrole ou synthèse de Fischer-Tropsch, ayant un point de fusion de 25 à 125°C, incorporée dans le polymère au cours de la polymérisation.

3. Substrat désintégrable et recyclable comprenant du papier, du carton, des fibres organiques, du bois, des composites de bois et des textiles non tissés avec une hydrophobicité et/ou une résistance à la vapeur améliorées, qui est revêtu d'un polymère pouvant être obtenu par polymérisation en émulsion ou en suspension d'un mélange de monomères éthyléniquement insaturés comprenant :
(1) 35-98 parties en poids (calculé par rapport à la quantité totale de monomères dans le mélange) de (meth)acrylate d'alkyle en C₁₋₁₈ ;
(2) 0,05-5 parties d'acide carboxylique insaturé en C₃₋₈ ;
(3) 1-60 parties en poids d'un monomère aromatique vinylique, ce mélange étant pratiquement dépourvu de di-oléfines conjuguées en C₃₋₈,
en présence de 0,01 à 5% en poids, calculé par rapport à la quantité de monomères, d'une cire hydrocarbonée pouvant être obtenue par raffinage de pétrole ou synthèse de Fischer-Tropsch, ayant un point de fusion de 25 à 125°C, incorporée dans le polymère au cours de la polymérisation.

4. Polymère pouvant être obtenu par une technique en émulsion ou en suspension comprenant la polymérisation d'un mélange de monomères comprenant :
(1) 46-65,5 parties en poids (calculé par rapport à la quantité totale de monomères dans le mélange) de (meth)acrylate d'alkyle en C₁₋₁₈ ;
(2) 0,05-5 parties d'acide carboxylique insaturé en C₃₋₈ ;
(3) 30,5-50 parties en poids d'un monomère aromatique vinylique
ce mélange étant pratiquement dépourvu de di-oléfines conjuguées en C₃₋₈,
en présence de 0,01 à 5% en poids, calculé par rapport à la quantité de monomères, d'une cire hydrocarbonée pouvant être obtenue par raffinage de pétrole ou synthèse de Fischer-Tropsch, ayant un point de fusion de 25 à 125°C.

5. Utilisation d'un polymère conforme à la revendication 1, dans lequel le mélange de monomères qui est polymérisé comprend du styrène et/ou de l'α-méthylstyrène, de l'acrylate de butyle et/ou de l'acrylate de 2-éthylhexyle et de l'acide (meth)acrylique.

6. Procédé conforme à la revendication 2, dans lequel le mélange de monomères qui est polymérisé comprend du styrène et/ou de l'α-méthylstyrène, de l'acrylate de butyle et/ou de l'acrylate de 2-éthylhexyle et de l'acide (meth)acrylique.

7. Substrat désintégrable et recyclable conforme à la revendication 3, dans lequel le mélange de monomères qui est polymérisé comprend du styrène et/ou de l'α-méthylstyrène, de l'acrylate de butyle et/ou de l'acrylate de 2-éthylhexyle et de l'acide (meth)acrylique.

8. Polymère conforme à la revendication 4, dans lequel le mélange de monomères qui est polymérisé comprend du styrène et/ou de l'α-méthylstyrène, de l'acrylate de butyle et/ou de l'acrylate de 2-éthylhexyle et de l'acide (meth)acrylique.

9. Utilisation d'un polymère conforme à la revendication 1 ou à la revendication 5, dans lequel la quantité de cire hydrocarbonée est comprise entre 0,25 et 2% en poids, calculé par rapport à la quantité de monomères, et dans lequel la cire hydrocarbonée a un point de fusion compris entre 40 et 80°C.

10. Procédé conforme à la revendication 2 ou à la revendication 6, dans lequel la quantité de cire hydrocarbonée est comprise entre 0,25 et 2% en poids, calculé par rapport à la quantité de monomères, et dans lequel la cire hydrocarbonée a un point de fusion compris entre 40 et 80°C.

11. Substrat désintégrable et recyclable conforme à la revendication 3 ou à la revendication 7, dans lequel la quantité de cire hydrocarbonée est comprise entre 0,25 et 2% en poids, calculé par rapport à la quantité de monomères, et dans lequel la cire hydrocarbonée a un point de fusion compris entre 40 et 80°C.

12. Polymère conforme à la revendication 4 ou à la revendication 8, dans lequel la quantité de cire hydrocarbonée est comprise entre 0,25 et 2% en poids, calculé par rapport à la quantité de monomères, et dans lequel la cire hydrocarbonée a un point de fusion compris entre 40 et 80°C.

13. Utilisation d'un polymère conforme à la revendication 1, 5, ou 9, dans lequel le substrat comprend du papier, du carton, du bois ou des composites de bois.

14. Procédé conforme à la revendication 2, 6 ou 10, dans lequel le substrat comprend du papier, du carton, du bois ou des composites de bois.

15. Substrat désintégrable et recyclable conforme à la revendication 3, 7 ou 11, dans lequel le substrat, comprend du papier, du carton, du bois ou des composites de bois.

16. Utilisation d'un polymère conforme à la revendication 1, 5, 9 ou 13 dans lequel les monomères éthyléniquement insaturés comprennent:
(1) 46-65,5 parties en poids (calculé par rapport à la quantité totale de monomères dans le mélange) de (meth)acrylate d'alkyle en C₁₋₁₈ ;
(2) 0,05-5 parties d'acide carboxylique insaturé en C₃₋₈ ; et
(3) 30,5-50 parties en poids d'un monomère aromatique vinylique, et ce mélange étant pratiquement dépourvu de di-oléfines conjuguées en C₃₋₈.

17. Procédé conforme à la revendication 2, 6, 10 ou 14 dans lequel les monomères éthyléniquement insaturés comprennent :
(1) 46-65,5 parties en poids (calculé par rapport à la quantité totale de monomères dans le mélange) de (meth)acrylate d'alkyle en C₁₋₁₈ ;
(2) 0,05-5 parties d'acide carboxylique insaturé en C₃₋₈ ;
(3) 30,5-50 parties en poids d'un monomère aromatique vinylique, et ce mélange étant pratiquement dépourvu de di-oléfines conjuguées en C₃₋₈.

18. Substrat désintégrable et recyclable conforme à la revendication 3, 7, 11 ou 15, dans lequel dans lequel les monomères éthyléniquement insaturés comprennent :
(1) 46-65,5 parties en poids (calculées par rapport à la quantité totale dans le mélange) de (meth)acrylate d'alkyle en C₁₋₁₈ ;
(2) 0,05-5 parties d'acide carboxylique insaturé en C₃₋₈ ;
(3) 30,5-50 parties en poids d'un monomère aromatique vinylique, et ce mélange étant pratiquement dépourvu de di-oléfines conjuguées en C₃₋₈.

19. Polymère conforme aux revendications 4, 8 ou 12, qui est préparé en introduisant la cire hydrocarbonée dans le mélange de polymérisation sous forme d'une cire solide dissoute dans le monomère ou sous forme d'une émulsion/dispersion de cire, soit dans le monomère, soit dans une autre charge.

20. Composition polymère avec de la cire hydrocarbonée qui est conforme à l'une quelconques des revendications 4, 8, 12 ou 19 sous forme d'un latex ou d'une dispersion.

21. Utilisation d'un substrat revêtu conforme à la revendication 3, 7, 11, 15 ou 18, dans le recyclage et la désintégration de matériaux.

## Revendications (Revendications pour l'(les) Etat(s) contractant(s) suivant(s): DE, DK, FR)

1. Utilisation d'un polymère pouvant être obtenu par polymérisation en émulsion ou en suspension d'un mélange de monomères éthyléniquement insaturés comprenant :
(1) 35-98 parties en poids (calculé par rapport à la quantité totale de monomères dans le mélange) de (meth)acrylate d'alkyle en C₁₋₁₈ ;
(2) 0,05-5 parties d'acide carboxylique insaturé en C₃₋₈ ;
(3) 1-60 parties en poids d'un monomère aromatique vinylique ce mélange étant pratiquement dépourvu de di-oléfines conjuguées en C₃₋₈,
en présence de 0,01 à 5% en poids, calculé par rapport à la quantité de monomères, d'une cire hydrocarbonée pouvant être obtenue par raffinage de pétrole ou synthèse de Fischer-Tropsch, ayant un point de fusion de 25 à 125°C, cette cire étant incorporée dans le polymère au cours de la polymérisation pour revêtir un substrat comprenant du papier, du carton, des fibres organiques, du bois, des composites de bois et des textiles non tissés, à l'exclusion du carton SUS, dudit polymère, afin de conférer ou d'améliorer l'hydrophobicité et/ou la résistance à la vapeur, et afin d'obtenir un substrat revêtu, recyclable et désintégrable.

2. Procédé permettant de conférer ou d'améliorer l'hydrophobicité et/ou la résistance à la vapeur, tout en conservant l'aptitude au recyclage et à la désintégration d'un substrat comprenant du papier, du carton, des fibres organiques, du bois, des composites de bois et des textiles non tissés, à l'exclusion du carton SUS, qui comprend le revêtement du substrat par le polymère pouvant être obtenu par polymérisation en émulsion ou en suspension d'un mélange de monomères éthyléniquement insaturés comprenant:
(1) 35-98 parties en poids (calculé par rapport à la quantité totale de monomères dans le mélange) de (meth)acrylate d'alkyle en C₁₋₁₈ ;
(2) 0,05-5 parties d'acide carboxylique insaturé en C₃₋₈ ;
(3) 1-60 parties en poids d'un monomère aromatique vinylique ce mélange étant pratiquement dépourvu de di-oléfines conjuguées en C₃₋₈,
en présence de 0,01 à 5% en poids calculé, par rapport à la quantité de monomères, d'une cire hydrocarbonée pouvant être obtenue par raffinage de pétrole ou synthèse de Fischer-Tropsch, ayant un point de fusion de 25 à 125°C, incorporée dans le polymère au cours de la polymérisation.

3. Substrat désintégrable et recyclable comprenant du papier, du carton, des fibres organiques, du bois, des composites de bois et des textiles non tissés, à l'exclusion du carton SUS avec une hydrophobicité et/ou une résistance à la vapeur améliorées, qui est revêtu d'un polymère pouvant être obtenu par polymérisation en émulsion ou en suspension d'un mélange de monomères éthyléniquement insaturés comprenant :
(1) 35-98 parties en poids (calculé par rapport à la quantité totale de monomères dans le mélange) de (meth)acrylate d'alkyle en C₁₋₁₈ ;
(2) 0,05-5 parties d'acide carboxylique insaturé en C₃₋₈ ;
(3) 1-60 parties en poids d'un monomère aromatique vinylique, ce mélange étant pratiquement dépourvu de di-oléfines conjuguées en C₃₋₈,
en présence de 0,01 à 5% en poids, calculé par rapport à la quantité de monomères, d'une cire hydrocarbonée pouvant être obtenue par raffinage de pétrole ou synthèse de Fischer-Tropsch, ayant un point de fusion de 25 à 125°C, incorporée dans le polymère au cours de la polymérisation.

4. Polymère pouvant être obtenu par une technique en émulsion ou en suspension comprenant la polymérisation d'un mélange de monomères comprenant :
(1) 46-65,5 parties en poids (calculé par rapport à la quantité totale de monomères dans le mélange) de (meth)acrylate d'alkyle en C₁₋₁₈ ;
(2) 0,05-5 parties d'acide carboxylique insaturé en C₃₋₈ ;
(3) 30,5-50 parties en poids d'un monomère aromatique vinylique
ce mélange étant pratiquement dépourvu de di-oléfines conjuguées en C₃₋₈,
en présence de 0,01 à 5% en poids, calculé par rapport à la quantité de monomères, d'une cire hydrocarbonée pouvant être obtenue par raffinage de pétrole ou synthèse de Fischer-Tropsch, ayant un point de fusion de 25 à 125°C.

5. Utilisation d'un polymère conforme à la revendication 1, dans lequel le mélange de monomères qui est polymérisé comprend du styrène et/ou de l'α-méthylstyrène, de l'acrylate de butyle et/ou de l'acrylate de 2-éthylhexyle et de l'acide (meth)acrylique.

6. Procédé conforme à la revendication 2, dans lequel le mélange de monomères qui est polymérisé comprend du styrène et/ou de l'α-méthylstyrène, de l'acrylate de butyle et/ou de l'acrylate de 2-éthylhexyle et de l'acide (meth)acrylique.

7. Substrat désintégrable et recyclable conforme à la revendication 3, dans lequel le mélange de monomères qui est polymérisé comprend du styrène et/ou de l'α-méthylstyrène, de l'acrylate de butyle et/ou de l'acrylate de 2-éthylhexyle et de l'acide (meth)acrylique.

8. Polymère conforme à la revendication 4, dans lequel le mélange de monomères qui est polymérisé comprend du styrène et/ou de l'α-méthylstyrène, de l'acrylate de butyle et/ou de l'acrylate de 2-éthylhexyle et de l'acide (meth)acrylique.

9. Utilisation d'un polymère conforme à la revendication 1 ou à la revendication 5, dans lequel la quantité de cire hydrocarbonée est comprise entre 0,25 et 2% en poids, calculé par rapport à la quantité de monomères, et dans lequel la cire hydrocarbonée a un point de fusion compris entre 40 et 80°C.

10. Procédé conforme à la revendication 2 ou à la revendication 6, dans lequel la quantité de cire hydrocarbonée est comprise entre 0,25 et 2% en poids, calculé par rapport à la quantité de monomères, et dans lequel la cire hydrocarbonée a un point de fusion compris entre 40 et 80°C.

11. Substrat désintégrable et recyclable conforme à la revendication 3 ou à la revendication 7, dans lequel la quantité de cire hydrocarbonée est comprise entre 0,25 et 2% en poids, calculé par rapport à la quantité de monomères, et dans lequel la cire hydrocarbonée a un point de fusion compris entre 40 et 80°C.

12. Polymère conforme à la revendication 4 ou à la revendication 8, dans lequel la quantité de cire hydrocarbonée est comprise entre 0,25 et 2% en poids, calculé par rapport à la quantité de monomères, et dans lequel la cire hydrocarbonée a un point de fusion compris entre 40 et 80°C.

13. Utilisation d'un polymère conforme à la revendication 1, 5, ou 9, dans lequel le substrat comprend du papier, du carton, du bois ou des composites de bois.

14. Procédé conforme à la revendication 2, 6 ou 10, dans lequel le substrat comprend du papier, du carton, du bois ou des composites de bois.

15. Substrat désintégrable et recyclable conforme à la revendication 3, 7 ou 11, dans lequel le substrat, comprend du papier, du carton, du bois ou des composites de bois.

16. Utilisation d'un polymère conforme à la revendication 1, 5, 9 ou 13 dans lequel les monomères éthyléniquement insaturés comprennent:
(1) 46-65,5 parties en poids (calculé par rapport à la quantité totale de monomères dans le mélange) de (meth)acrylate d'alkyle en C₁₋₁₈ ;
(2) 0,05-5 parties d'acide carboxylique insaturé en C₃₋₈ ; et
(3) 30,5-50 parties en poids d'un monomère aromatique vinylique, et ce mélange étant pratiquement dépourvu de di-oléfines conjuguées en C₃₋₈.

17. Procédé conforme à la revendication 2, 6, 10 ou 14 dans lequel les monomères éthyléniquement insaturés comprennent :
(1) 46-65,5 parties en poids (calculé par rapport à la quantité totale de monomères dans le mélange) de (meth)acrylate d'alkyle en C₁₋₁₈ ;
(2) 0,05-5 parties d'acide carboxylique insaturé en C₃₋₈ ; et
(3) 30,5-50 parties en poids d'un monomère aromatique vinylique, et ce mélange étant pratiquement dépourvu de di-oléfines conjuguées en C₃₋₈.

18. Substrat désintégrable et recyclable conforme à la revendication 3, 7, 11 ou 15, dans lequel dans lequel les monomères éthyléniquement insaturés comprennent :
(1) 46-65,5 parties en poids (calculé par rapport à la quantité totale de monomères dans le mélangej de (meth)acrylate d'alkyle en C₁₋₁₈ ;
(2) 0,05-5 parties d'acide carboxylique insaturé en C₃₋₈ ;
(3) 30,5-50 parties en poids d'un monomère aromatique vinylique, et ce mélange étant pratiquement dépourvu de di-oléfines conjuguées en C₃₋₈.

19. Polymère conforme aux revendications 4, 8 ou 12, qui est préparé en introduisant la cire hydrocarbonée dans le mélange de polymérisation sous forme d'une cire solide dissoute dans le monomère ou sous forme d'une émulsion/dispersion de cire soit dans le monomère, soit dans une autre charge.

20. Composition polymère avec de la cire hydrocarbonée qui est conforme à l'une quelconques des revendications 4, 8, 12 ou 19 sous forme d'un latex ou d'une dispersion.

21. Utilisation d'un substrat revêtu conforme à la revendication 3, 7, 11, 15 ou 18, dans le recyclage et la désintégration de matériaux, sans renoncer à l'utilisation de carton SUS.
